# EUROPEAN PATENT SPECIFICATION

(11) **EP 3 912 790 B1**
(45) Date of publication and mention of the grant of the patent: **02.10.2024**
(21) Application number: 20872264.5
(22) Date of filing: 20.08.2020
(51) Int. Cl.: B29C 45/37, B29C 45/00, B29C 45/76, C08L 69/00, C08L 55/02, G01N 21/88, G01N 21/47, G01N 21/57, B29K 105/00, G01J 3/50, G01N 21/55

(54) **MARBLE-COLOR MOLDED PRODUCT**
MARMORFARBENES GEFORMTES PRODUKT
PRODUIT MOULÉ COULEUR DE MARBRE

(30) Priority: 30.09.2019 KR 20190121207
(43) Date of publication of application: 24.11.2021
(73) Proprietor: LG Chem, Ltd., Seoul 07336, (KR)
(72) Inventor: HAN, Jung Jin, Daejeon 34122 (KR); LEE, Su Kyoung, Daejeon 34122 (KR); BAE, Sung Hak, Daejeon 34122 (KR); LEE, Ryul, Daejeon 34122 (KR); LEE, Yong Ju, Daejeon 34122 (KR); KIM, Hyung Sok, Daejeon 34122 (KR); HAN, Sang Choll, Daejeon 34122 (KR); MOON, Cho Rok, Daejeon 34122 (KR); KWAK, Byoung Jin, Daejeon 34122 (KR)
(74) Representative: Goddar, Heinz J.
(86) International application number: PCT/KR2020/011111
(87) International publication number: WO 2021/066321

(56) References cited:
- EP-A1- 1 470 934
- EP-A1- 2 626 186
- CN-A- 103 180 118
- JP-A- H1 071 677
- JP-B2- 3 056 611
- KR-A- 20120 081 391
- KR-B1- 101 304 795
- US-A1- 2005 140 040
- US-A1- 2006 233 437
- US-A1- 2019 232 534
- US-B2- 6 692 683

## Description

### Technical Field

The present invention relates to a marbled molded product.

### Background Art

Engineering plastics (EP) such as polycarbonate resin, acrylonitrile-butadiene-styrene (ABS), and the like, which are thermoplastic resin plastics, are widely used as materials for IT home appliances, automotive parts and the like due to their excellent mechanical and thermal properties.

In order to create a pattern on the exterior of an injection-molded plastic product, an application process such as spraying, coating or plating is generally performed on the top surface of the injection-molded plastic product. However, this application process causes environmental problems due to an adhesive used in this process and volatile organic compounds (VOCs) generated in a washing process. In addition, this application process has problems in that, since it is performed through a number of complex steps, the defect rate therein increases, and in that considerable logistics costs are incurred, such as separate costs for transport to the application process and a packaging process after injection molding of the plastic product.

Accordingly, there is an increasing demand for creating a pattern on the exterior of a plastic product without using an application process, and studies have been actively conducted to create a metal look, an artificial marble pattern or the like using pearl, metallic particles, pigment particles, etc. Among them, the artificial marble pattern is collectively referred to as a marble color. Until now, a mold pattern for effectively forming the marble color and a system for evaluating a marble color effect have not been specifically proposed.

Here, the expression "it can be seen that the marble color has been effectively formed" means that the marbled region can be well viewed omnidirectionally even if the marbled molded product is viewed from various orientations.

Meanwhile, a marbled molded product formed without using the application process generally tends to have a lower surface hardness than a molded plastic article having a coating layer formed using the application process, and hence a mold pattern for improving the surface hardness is also required.

US 2005/0140040 A1 discloses a resin molded product of a luminous colorant obtained by molding a mixture of a luminous coloring agent and a resin by the use of a mold engraved with a pattern having a plane face on an internal surface. EP 1470934 A1 discloses a resin molded product having a surface formed with a pattern shape imitative of natural leather.

### DISCLOSURE

### Technical Problem

The present invention has been made in order to solve the above-described problems, and an object of the present invention is to provide a marbled molded product in which a marble color may be effectively formed and which may maintain a high surface hardness.

### Technical Solution

The present invention provides a marbled molded product which is an injection-molded product of a mixture comprising: a thermoplastic resin comprising one selected from the group consisting of polycarbonate, acrylonitrile-butadiene-styrene, polybutylene terephthalate, polypropylene, and combinations thereof; and fine pigment particles having a size of 25 pm to 2,000 pm, wherein a pattern forming a texture is formed on the surface of the injection-molded product, characterised in that the pattern that is formed on the surface of the molded product has a depth of 100 nm to 1,000 µm, and an average roughness (Ra) of the surface of the molded product, which has the pattern formed thereon, is 1.12 pm to 12.5 pm.

According to one embodiment of the present invention, the pattern may have a depth of 10 pm to 50 µm and a width of 50 pm to 300 µm, and the texture formed by the pattern may be a hairline texture.

According to another embodiment of the present invention, the pattern may have a depth of 8 pm to 12 µm and a width of 50 µm to 100 µm, and the texture formed by the pattern may be a woven texture.

According to a further embodiment of the present invention, the pattern may have a depth of 50 pm to 100 µm, and the texture formed by the pattern may be a leather texture.

### Advantageous Effects

The marbled molded product according to the present invention is a marbled molded product in which a marble color may be effectively formed and which may maintain a high surface hardness.

The effects of the present invention are not limited to the above-described effects, and effects which are not mentioned herein will be clearly understood by those skilled in the art from the present specification and the accompanying drawings.

### Brief Description of Drawings

FIG. 1 shows a captured image of an example of a marbled molded product produced using an embodiment of a mold cavity having a hairline texture pattern, and an enlarged microscopic image of the surface of the marbled molded product.
FIG. 2 shows a captured image of an example of a marbled molded product produced using an embodiment of a mold cavity having a woven texture pattern, and an enlarged microscopic image of the surface of the marbled molded product.
FIG. 3 shows a captured image of an example of a marbled molded product produced using an embodiment of a mold cavity having a leather texture pattern, and an enlarged microscopic image of the surface of the marbled molded product.
FIG. 4 is a schematic view showing a marble color effect evaluation system.
FIG. 5(a) shows an example of an image before being processed by an image processing unit, and FIG. 5(b) shows an image obtained by processing the image of FIG. 5(a) by the image processing unit according to a predetermined reference.
FIGS. 6(a), 6(b), 6(c), 6(d) and 6(e) show images of specimens of Comparative Example 1, Comparative Example 2, Example 1, Example 2 and Example 3, respectively, captured by an image-capturing unit 20 of a marble color effect evaluation system 100.

### Best Mode

The present invention will become apparent with reference to embodiments described below in detail together with the accompanying drawings. However, the present invention is not limited to the embodiments disclosed below and may be embodied in a variety of different forms. Rather, these embodiments are provided in order for this disclosure to be thorough and complete, and in order to fully convey the scope of the present invention to those skilled in the art, and the scope of the present invention will be defined only by the appended claims. Meanwhile, terms used in the present specification serve to explain embodiments and are not intended to limit the scope of the present invention. In this specification, singular forms also include plural forms unless specifically stated in the context thereof. As used in the specification, the terms "comprises" and/or "comprising" specify the presence of stated elements, steps, operations and/or components, but do not preclude the presence or addition of one or more other elements, steps, operations and/or components. Although terms such as "first" and "second" may be used to describe various components, the components should not be limited by these terms. These terms are used only to distinguish one component from another component.

Throughout the present specification, it is to be understood that when any part is referred to as "comprising" any component, it does not exclude other components, but may further comprise other components, unless otherwise specified.

Throughout the present specification, when any member is referred to as being "on" another member, it not only refers to a case where any member is in contact with another member, but also a case where a third member exists between the two members.

Throughout the present specification, "A and/or B" refers to "A and B" or "A or B".

Hereinafter, the present invention will be described in more detail.

The present invention provides a marbled molded product which is an injection-molded product of a mixture comprising: a thermoplastic resin comprising one selected from the group consisting of polycarbonate, acrylonitrile-butadiene-styrene, polybutylene terephthalate, polypropylene, and combinations thereof; and fine pigment particles, wherein a pattern forming a texture is formed on the surface of the injection-molded product.

The marbled molded product of the present invention is a marbled molded product in which a marble color may be effectively formed and which may maintain a high surface hardness.

The marbled molded product comprises a thermoplastic resin comprising one selected from the group consisting of polycarbonate, acrylonitrile-butadiene-styrene, polybutylene terephthalate, polypropylene, and combinations thereof. Specifically, the thermoplastic resin may be a resin comprising only any one of polycarbonate (PC), acrylonitrile-butadiene-styrene (ABS), polybutylene terephthalate (PBT) and polypropylene (PP), or may comprise one selected from the group consisting of polycarbonate (PC), acrylonitrile-butadiene-styrene (ABS), polybutylene terephthalate (PBT), polypropylene (PP), and combinations thereof. By selecting the material of the thermoplastic resin from those described above, it is possible to improve the compatibility of the thermoplastic resin with the fine pigment particles, and at the same time, improve the workability thereof during injection molding.

The marbled molded product comprises fine pigment particles. Where the marbled molded product comprises the fine pigment particles as described above, it is possible to improve the marble color effect on the surface of the marbled molded product. In the present specification, the marble color effect may refer to a marble shape and/or form created by exposure of the fine pigment particles to the surface of the thermoplastic resin, and the marble may be artificial marble.

The size of the fine pigment particles is 25 pm to 2,000 µm, or may be 50 pm to 1,900 pm, 100 pm to 1,800 pm, 200 pm to 1,700 pm, 300 pm to 1,600 pm, 400 pm to 1,500 pm, 500 pm to 1,400 pm, 600 pm to 1,300 pm, 700 pm to 1,200 pm, 800 pm to 1,100 pm, or 900 pm to 1,000 µm. By adjusting the size of the fine pigment particles within the above-described range, it is possible to improve the visibility of the fine pigment particles.

The fine pigment particles may be used as such without being coated with a separate dye. Where the fine pigment particles are used as such without being coated with a separate dye as described above, it is possible to create a marble color as the intrinsic color of the fine pigment particles.

The fine pigment particles may be coated with an organic dye and/or an inorganic dye. By coating the fine pigment particles with an organic dye and/or an inorganic dye as described above, it is possible to create a marble color as a color different from the intrinsic color of the fine pigment particles, and at the same time, impart the physical properties of the fine pigment particles to the marbled molded product and improve the compatibility between the thermoplastic resin and the fine pigment particles.

The shape of the fine pigment particles may be one selected from the group consisting of a plate shape, a cylindrical shape (pillar shape), a flake shape, and combinations thereof. By selecting the shape of the fine pigment particles from those described above, it is possible to improve the marble color effect of the marbled molded product.

The fine pigment particles may comprise one selected from the group consisting of plate-shaped mica, cellulose, viscose, aluminum (Al), pearl, and combinations thereof. By selecting the fine pigment particles from those described above, it is possible to improve the marble color effect of the marbled molded product.

The marbled molded product is an injection-molded product of a mixture comprising the thermoplastic resin and the fine pigment particles. Specifically, the marbled molded product is a molded product produced by heating and melting a mixture comprising the thermoplastic resin and the fine pigment particles, and then injecting the melt into a mold cavity. On the other hand, the marbled molded product may be a molded product produced by injecting an extruded product comprising the thermoplastic resin and the fine pigment particles into a mold cavity. Where the marbled molded product is produced using an injection-molded product of a mixture comprising the thermoplastic resin and the fine pigment particles as described above, it is possible to simplify the process of producing the marbled molded product and mass-produce the marbled molded product by shortening the production time of the marbled molded product.

The marbled molded product is an injection-molded product having, on the surface thereof, a pattern forming a texture. More specifically, the texture created on the surface of the injection-molded product may be a hairline texture, a woven texture, or a leather texture. Furthermore, the surface of molded product may refer to a portion exposed to the outside, that is, the air-contacting surface of the molded product, and may refer to the entire surface or a partial surface of the molded product. Where the pattern forming a texture is provided on the surface of the injection-molded product as described above, it is possible to improve the aesthetics of the marbled molded product, and to eliminate the need for separate painting or coating on the surface of the molded product, thus preventing painting or coating on the surface of the molded product from peeling off.

Furthermore, in the case of a marbled molded product in which the surface of the molded product is smooth (no pattern is formed on the surface), the degree of visibility of the marble color may vary greatly depending on a direction in which the surface is viewed. This is because the size, density, color brightness and the like of the fine pigment particles distributed on the surface of the marbled molded product thus produced are not uniform throughout to the entire area, and thus variation in the degree of diffused reflection of light incident on the surface of the marbled molded product may be different depending on the direction in which the surface is viewed. Therefore, where the pattern forming a texture is provided on the surface of the marbled molded product, even if the size, density, color brightness, etc. of the fine pigment particles distributed on the surface of the marbled molded product are not uniform throughout the entire area, it is possible to reduce variation in the degree of diffused reflection of light, incident on the surface of the marbled molded product by the transferred pattern, so as to be able to be distributed relatively evenly on the corresponding surface, and it is also possible to reduce variation in the degree of visibility of the marble color depending on the direction in which the surface is viewed.

The width of the pattern formed on the surface of the molded product may be 0.1 nm to 1,000 pm. Specifically, the width of the pattern formed on the surface of the molded product may be 1 nm to 900 pm, 10 nm to 800 pm, 100 nm to 500 pm, 500 nm to 300 pm, 800 nm to 200 pm, 1 pm to 100 pm, 10 pm to 90 pm, 20 pm to 80 pm, or 30 pm to 50 µm. The depth of the pattern formed on the surface of the molded product is 100 nm to 1,000 pm. Specifically, the depth of the pattern formed on the surface of the molded product may be 100 nm to 500 pm, 500 nm to 300 pm, 800 nm to 200 pm, 1 pm to 100 pm, 10 pm to 90 pm, 20 pm to 80 pm, or 30 um to 50 µm. More specifically, the pattern formed on the surface of the molded product may have a depth and/or a width on the order of nanometers to micrometers. That is, the depth and/or width of the pattern may be determined within a range that may improve the degree of visibility of the marble color and/or the hardness of the surface to a desired level depending on the type, shape and size of the fine pigment particles. Where the width and/or depth of the pattern formed on the surface of the molded product are/is adjusted within the above-described range, it is possible to improve the visibility of the fine pigment particles exposed to the pattern.

The average roughness (Ra) of the surface of the molded product, which has the pattern formed thereon, is 1.12 pm to 12.5 pm. Specifically, the average roughness (Ra) of the surface of the molded product, which has the pattern formed thereon, may be 4 pm to 12 pm, 5 pm to 11 µm, 6 pm to 10 pm, or 7 um to 9 pm. Where the average roughness (Ra) of the surface of the molded product, which has the pattern formed thereon, is adjusted within the above-described range, it is possible to improve the marble color effect of the surface of the marbled molded product and improve the visibility of the fine pigment particles.

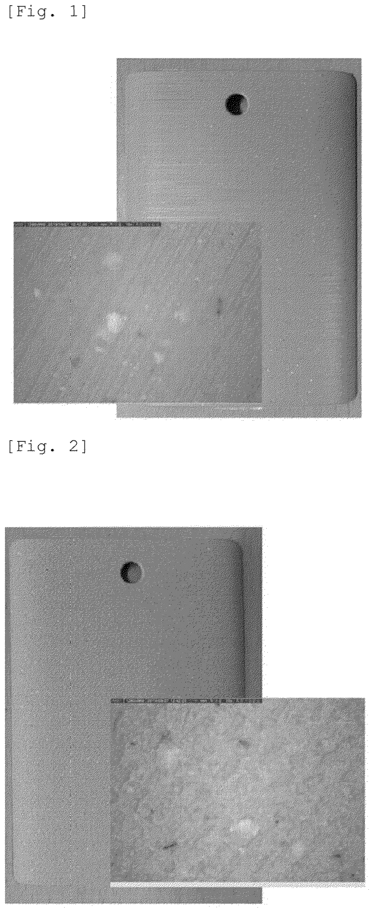

FIG. 1 shows a captured image of an example of a marbled molded product produced using an embodiment of a mold cavity having a hairline texture pattern, and an enlarged microscopic image of the surface of the marbled molded product.

According to one embodiment of the present invention, when the texture formed by the pattern is a hairline texture, the depth of the pattern may be 10 pm to 50 pm. Specifically, when the texture formed by the pattern is a hairline texture, the depth of the pattern may be 12 pm to 48 pm, 14 pm to 46 pm, 16 pm to 44 pm, 18 pm to 42 pm, 20 pm to 40 pm, 22 pm to 38 pm, 24 pm to 36 pm, 26 pm to 34 pm, or 28 pm to 32 pm. Furthermore, when the texture formed by the pattern is a hairline texture, the width of the pattern may be 50 pm to 300 µm. Specifically, when the texture formed by the pattern is a hairline texture, the width of the pattern may be 50 pm to 300 pm, 75 pm to 275 pm, 100 pm to 250 pm, 125 pm to 225 pm, or 150 pm to 200 pm. Where the width and/or depth of the pattern is adjusted within the above-described range when the texture formed by the pattern is a hairline texture, it is possible to enlarge a portion where the fine pigment particles are exposed to the pattern formed on the surface of the marbled molded product, and it is possible to increase the hardness of the surface by improving compatibility with the marbled molded product.

FIG. 2 shows a captured image of an example of a marbled molded product produced using an embodiment of a mold cavity having a woven texture pattern, and an enlarged microscopic image of the surface of the marbled molded product.

According to another embodiment of the present invention, when the texture formed by the pattern is a woven texture, the depth of the pattern may be 8 pm to 12 pm. Specifically, when the texture formed by the pattern is a woven texture, the depth of the pattern may be 8 pm to 12 pm, 8.5 µm to 11.5 pm, 9 pm to 11 pm, or 9.5 pm to 10.5 µm. Furthermore, when the texture formed by the pattern is a woven texture, the width of the pattern may be 50 pm to 100 pm. Specifically, when the texture formed by the pattern is a woven texture, the width of the pattern may be 55 µm to 95 pm, 60 pm to 90 pm, 65 pm to 85 pm, or 70 µm to 80 pm. Where the width and/or depth of the pattern is adjusted within the above-described range when the texture formed by the pattern is a woven texture, it is possible to improve visibility by enlarging a portion where the fine pigment particles are exposed to the pattern formed on the surface of the marbled molded product, and it is possible to increase the hardness of the surface by improving compatibility with the marbled molded product.

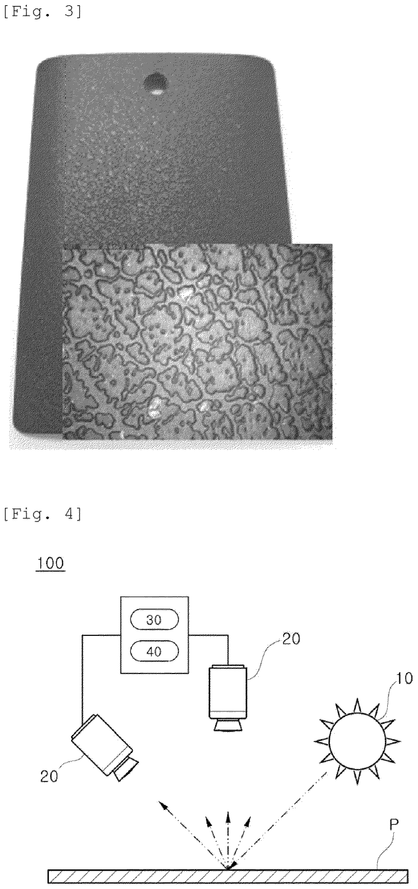

FIG. 3 shows a captured image of an example of a marbled molded product produced using an embodiment of a mold cavity having a leather texture pattern, and an enlarged microscopic image of the surface of the marbled molded product.

According to a further embodiment of the present invention, when the texture formed by the pattern is a leather texture, the depth of the pattern may be 50 pm to 100 pm. Specifically, when the texture formed by the pattern is a leather texture, the depth of the pattern may be 55 pm to 95 pm, 60 pm to 90 pm, 65 pm to 85 pm, or 70 pm to 80 pm. Where the depth of the pattern is adjusted within the above-described range when the texture formed by the pattern is a leather texture, it is possible to improve visibility by enlarging a portion where the fine pigment particles are exposed to the pattern formed on the surface of the marbled molded product, and it is possible to increase the hardness of the surface by improving compatibility with the marbled molded product.

A mold for producing a marbled molded product in which a pattern is formed on the inner surface of a cavity may be used. The mold for producing a marbled molded product may effectively form a marble color and may improve the surface hardness of the marbled molded product.

A mixture comprising a thermoplastic resin comprising one selected from the group consisting of polycarbonate, acrylonitrile-butadiene-styrene, polybutylene terephthalate, polypropylene, and combinations thereof, and fine pigment particles may be injected into and fill the interior of the cavity of the mold, and then molded. Alternatively, an extruded product comprising the thermoplastic resin and the fine pigment particles may be injected into the cavity of the mold. Where the molded product is produced by injecting a melt of the mixture into the cavity of the mold, it is possible to produce a molded product whose marble color effect has been created, and it is possible to mass-produce the molded product by shortening the production time.

In the present specification, description of the features of the mold, which overlap those of the marbled molded product, will be omitted.

A pattern may be formed on the inner surface of the cavity of the mold. Where a pattern is formed on the inner surface of the cavity of the mold as described above, it is possible to improve the marble color effect by transferring the pattern, formed on the inner surface of the cavity of the mold, to the surface of the molded product. Specifically, in the case of a marbled molded product obtained by injection molding through a mold cavity having a smooth inner surface, the degree of visibility of the marble color may vary greatly depending on the direction in which the surface is viewed. This is because the size, density, color brightness and the like of the fine pigment particles distributed on the surface of the marbled molded product thus produced are not uniform throughout to the entire area, and thus variation in the degree of diffused reflection of light incident on the surface of the marbled molded product may be different depending on the direction in which the surface is viewed.

A pattern forming a texture may be formed on the inner surface of the mold cavity. Where the pattern is transferred onto the surface of the marbled molded product, even if the average size, density, color brightness, etc. of the fine pigment particles distributed on the surface of the marbled molded product are not uniform throughout the entire area, it is possible to reduce variation in the degree of diffused reflection of light, incident on the surface of the marbled molded product by the transferred pattern, so as to be able to be distributed relatively evenly on the corresponding surface, and it is also possible to reduce variation in the degree of visibility of the marbled molded product depending on the direction in which the surface is viewed.

The width and/or depth of the pattern formed on the inner surface of the mold cavity may be 100 nm to 1,000 pm. Specifically, the width and/or depth of the pattern formed on the inner surface of the mold cavity may be 150 nm to 900 pm, 300 nm to 800 pm, 500 nm to 500 pm, 800 nm to 300 pm, 900 nm to 200 pm, 1 pm to 100 pm, 10 pm to 90 pm, 20 pm to 80 pm, or 30 pm to 50 pm. Specifically, the width and/or depth of the pattern formed on the inner surface of the mold cavity may be a depth and/or a width on the order of nanometers to micrometers. The width and/or depth of the pattern formed on the inner surface of the mold cavity may be determined within a range that may improve the degree of visibility of the marble color and/or the hardness of the surface to a desired level depending on the type, shape and size of the fine pigment particles. Where the width and/or depth of the pattern formed on the inner surface of the mold cavity are/is adjusted within the above-described range, it is possible to adjust the width and/or depth of the pattern formed on the marbled molded product by transfer of the pattern on the inner surface of the mold cavity and to improve the visibility of the fine pigment particles.

The average roughness (Ra) of the inner surface of the mold cavity, which has the pattern formed thereon, may be 1.12 pm to 12.5 µm. More specifically, the average roughness (Ra) of the inner surface of the mold cavity, which has the pattern formed thereon, may be 4 pm to 12 pm, 5 pm to 11 pm, 6 pm to 10 pm, or 7 pm to 9 pm. Where the average roughness of the inner surface of the mold cavity, which has the pattern formed thereon, is adjusted within the above-described range, it is possible to improve the marble color effect of the surface of the marbled molded product by transfer of the pattern and improve the visibility of the fine pigment particles.

When the texture of the inner surface of the mold cavity, which has the pattern formed thereon, is a hairline texture, the depth of the pattern may be 10 pm to 50 pm. Specifically, when the texture of the inner surface of the mold cavity, which has the pattern formed thereon, is a hairline texture, the depth of the pattern may be 12 pm to 48 pm, 14 pm to 46 pm, 16 pm to 44 pm, 18 µm to 42 pm, 20 pm to 40 pm, 22 pm to 38 pm, 24 pm to 36 pm, 26 pm to 34 pm, or 28 pm to 32 pm. Furthermore, when the texture of the inner surface of the mold cavity, which has the pattern formed thereon, is a hairline texture, the width of the pattern may be 50 pm to 300 pm. Specifically, when the texture of the inner surface of the mold cavity, which has the pattern formed thereon, is a hairline texture, the width of the pattern may be 50 pm to 300 pm, 75 pm to 275 pm, 100 pm to 250 pm, 125 pm to 225 pm, or 150 pm to 200 pm. Where the width and/or depth of the pattern are/is adjusted within the above-described range when the texture of the inner surface of the mold cavity, which has the pattern formed thereon, is a hairline texture, it is possible to enlarge a portion where the fine pigment particles are exposed to the pattern formed on the surface of the marbled molded product, and it is possible to increase the hardness of the surface by improving compatibility with the marbled molded product.

When the texture of the inner surface of the mold cavity, which has the pattern formed thereon, is a woven texture, the depth of the pattern may be 8 pm to 12 pm. Specifically, when the texture of the inner surface of the mold cavity, which has the pattern formed thereon, is a woven texture, the depth of the pattern may be 8 pm to 12 pm, 8.5 pm to 11.5 pm, 9 pm to 11 pm, or 9.5 pm to 10.5 µm. Furthermore, when the texture of the inner surface of the mold cavity, which has the pattern formed thereon, is a woven texture, the width of the pattern may be 50 pm to 100 pm. Specifically, when the texture of the inner surface of the mold cavity, which has the pattern formed thereon, is a woven texture, the width of the pattern may be 55 pm to 95 pm, 60 pm to 90 pm, 65 pm to 85 pm, or 70 pm to 80 µm. Where the width and/or depth of the pattern are/is adjusted within the above-described range when the texture of the inner surface of the mold cavity, which has the pattern formed thereon, is a woven texture, it is possible to improve visibility by enlarging a portion where the fine pigment particles are exposed to the pattern formed on the surface of the marbled molded product, and it is possible to increase the hardness of the surface by improving compatibility with the marbled molded product.

When the texture of the inner surface of the mold cavity, which has the pattern formed thereon, is a leather texture, the depth of the pattern may be 50 pm to 100 pm. Specifically, when the texture of the inner surface of the mold cavity, which has the pattern formed thereon, is a leather texture, the depth of the pattern may be 55 pm to 95 pm, 60 pm to 90 pm, 65 pm to 85 pm, or 70 µm to 80 µm. Where the depth of the pattern is adjusted within the above-described range when the texture of the inner surface of the mold cavity, which has the pattern formed thereon, is a leather texture, it is possible to improve visibility by enlarging a portion where the fine pigment particles are exposed to the pattern formed on the surface of the marbled molded product, and it is possible to increase the hardness of the surface by improving compatibility with the marbled molded product.

A method for producing the marbled molded product of the present invention is that in which the marbled molded product may be produced by injecting, into a mold cavity, an extruded product of a mixture comprising: a thermoplastic resin comprising one selected from the group consisting of polycarbonate, acrylonitrile-butadiene-styrene, polybutylene terephthalate, polypropylene, and combinations thereof; and fine pigment particles. Alternatively, the marbled molded product may be produced by injecting, into a mold cavity, a melt of a mixture comprising: a thermoplastic resin comprising one selected from the group consisting of polycarbonate, acrylonitrile-butadiene-styrene, polybutylene terephthalate, polypropylene, and combinations thereof; and fine pigment particles.

The method for producing a marbled molded product may be a method for producing a marbled molded product in which a marble color may be effectively formed and which may maintain a high surface hardness.

In the present specification, description of the features of the method for producing a marbled molded product, which overlap those of the marbled molded product, will be omitted.

The temperature of the injection molding process may be 230°C to 320°C. Specifically, the temperature of the injection molding process may be 240°C to 310°C, 250°C to 300°C, 260°C to 290°C, or 270°C to 280°C. By adjusting the temperature of the injection molding process within the above-described range, it is possible to improve the fillability of the mold cavity by adjusting the viscosity of the melt of the mixture in the injection molding process.

The mixture comprising the thermoplastic resin and the fine pigment particles is injection-molded. Specifically, a melt formed by heating and melting the mixture comprising the thermoplastic resin and the fine pigment particles may be injection-molded in a mold cavity. Where the mixture comprising the thermoplastic resin and the fine pigment particles is injection-molded as described above, it is possible to produce a molded product onto which the pattern provided on the inner surface of the mold cavity has been transferred. More specifically, the molded product produced by the above production method may have an artificial marble pattern, that is, a marble color.

An extruded product formed by mixing the thermoplastic resin with the fine pigment particles may be injection-molded in a mold cavity. Where the extruded product formed by mixing the thermoplastic resin with the fine pigment particles is injection-molded in the mold cavity, it is possible to produce a molded product having an artificial marble pattern.

A system 100 for evaluating a marble color effect of a marbled molded product which is an injection-molded product of a mixture comprising: a thermoplastic resin comprising one selected from the group consisting of polycarbonate, acrylonitrile-butadiene-styrene, polybutylene terephthalate, polypropylene, and combinations thereof; and fine pigment particles, is a system comprising: a light source unit 10 configured to emit light onto the surface of the molded product while forming an angle with the surface of the molded product; an image-capturing unit 20 configured to capture an image of light scattered from the surface of the molded product; an image processing unit 30 configured to process the image captured by the image-capturing unit in order to determine the boundaries of regions in which the marble color effect is created on the surface of the molded product; and an evaluation factor determination unit 40 configured to determine a marble color effect evaluation factor from the image processed by the image processing unit 30, wherein the marble color effect evaluation factor is at least one of: the number of the regions in which the marble color effect is created; the average size of the regions in which the marble color effect is created; and a difference in average color brightness between the regions in which the marble color effect is created and a region in which the marble color effect is not created.

The marble color effect evaluation system may quantitatively evaluate the marble color effect of the surface of the marbled molded product by determining an evaluation factor that may quantitatively determine the marble color effect.

The marbled molded product to be evaluated in the marble color effect evaluation system may be a molded product produced by injection molding using a mold cavity having a smooth inner surface, or may be a molded product produced by injection molding using a mold cavity having a pattern formed on an inner surface thereof. Where the pattern on the inner surface for the marbled molded product to be evaluated is selected as described above, it is possible to quantitatively evaluate the marble color effect.

FIG. 4 is a schematic view showing the marble color effect evaluation system.

The marble color effect evaluation system 100 may comprise a light source unit 10, an image-capturing unit 20, an image processing unit 30 and an evaluation factor determination unit 40.

The light source unit 10 emits light onto the surface of a marbled molded product P at a predetermined angle. Specifically, the light source unit 10 emits light onto the surface of the marbled molded product while forming an angle with the surface of the marbled molded product P. Where the light source unit 10 emits light onto the surface of the marbled molded product P while forming an angle with the surface of the marbled molded product P as described above, it is possible to create an image that may confirm the marble color effect.

The image-capturing unit 20 captures an image of light scattered from the surface of the molded product. Specifically, the image-capturing unit 20 may capture an image of light scattered from the surface of the marble molded product P. This image-capturing unit 20 may be a CCD camera. Where the image-capturing unit 20 captures the image of the scattered light as described above, it is possible to capture the image of light of the particles creating the marble color effect.

One image-capturing unit 20 may be provided so that it may capture an image of light while moving along a virtual semicircular path in one side of the marbled molded product P. Where a single image-capturing unit 20 is provided so that it captures an image of light while moving along a virtual semicircular path in one side of the marbled molded product P as described above, it is possible to reduce the production cost for constructing the marble color effect evaluation system and minimize the image difference caused by the difference between two or more image-capturing units.

A plurality of image-capturing units 20 are arranged along a virtual semicircular path so that they may all operate to capture an image of light. Where a plurality of image-capturing units 20 are arranged along a virtual semicircular path as described above so that they may all operate to capture an image of light as described above, it is possible to evaluate a large amount of molded product surfaces by shortening the time for image capturing.

The marble color effect evaluation system comprises the image processing unit 30 configured to process the image captured by the image-capturing unit 20 in order to determine a boundary of a region in which the marble color effect is created on the surface of the molded product. Specifically, the image processing unit 30 may process an image to determine the boundary of the marble color region from the image captured by the image-capturing unit 20, and may be implemented as a predetermined processor. Where the marble color effect evaluation system comprises the image processing unit as described above, it is possible to clearly determine the boundary of a region in which the marble color effect is created, and it is possible to quantitatively compare a region in which the marble color effect is not created.

The image processing unit 30 may determine the boundary of a region in which the marble color effect is created, by extracting a contrast value for each pixel from the captured image, determining that pixels each having a value equal to or greater than a predetermined reference value are boundary pixels forming the boundary of the region in which the marble color effect is created, and connecting the boundary pixels. Where the boundary of the region in which the marble color effect is created is determined as described above, it is possible to process the captured original image so that the boundary is clearly visible.

The reference contrast value for determining the boundary of the region in which the marble color effect is created may differ depending on each color previously set. Where the image processing unit 30 sets a different reference value for each color of the marble color as described above, it is possible to process the captured image so that the boundary of the region in which the marble color effect is created is clearly visible.

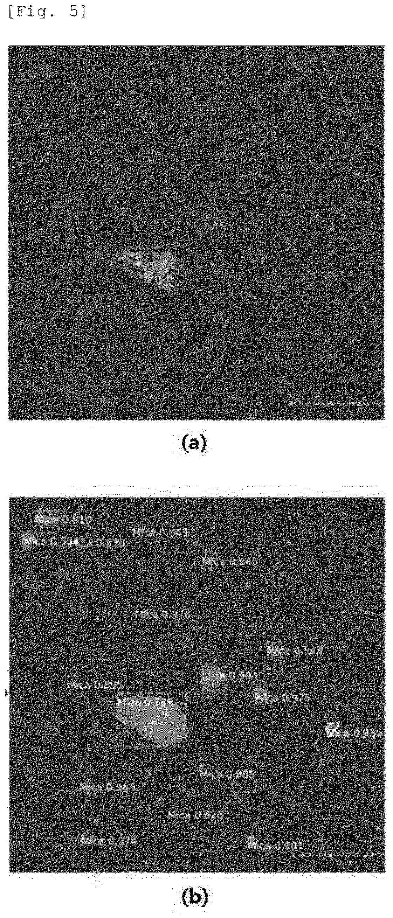

FIG. 5(a) shows an example of an image before being processed by the image processing unit, and FIG. 5(b) shows an image obtained by processing the image of FIG. 5(a) by the image processing unit according to a predetermined reference.

For the marbled molded product that is the object of the image of FIG. 5, mica was used as the fine pigment particles, and the inner surface of the mold cavity, on which the pattern was formed, had an average roughness (Ra) of 1.12 µm. The marbled molded product produced under these conditions was used as a reference.

Referring to FIG. 5, in the image of FIG. 5(a) before being processed by the image processing unit, it was confirmed that the boundary of the region in which the marble color effect is created is unclear. In contrast, in the image of FIG. 5(b) obtained by processing the image of FIG. 5(a) by the image processing unit, it was confirmed that the boundary of the region in which the marble color effect is created is clearly visible.

The marble color effect evaluation system comprises the evaluation factor determination unit 40 for determining a marble color effect evaluation factor from the image processed by the image processing unit. By comprising the evaluation factor determination unit as described above, it is possible to clearly distinguish the boundary of the region in which the marble color effect is created.

The marble color effect evaluation factor is at least one of: the number of regions in which the marble color effect is created; the average size of the regions in which the marble color effect is created; and a difference in average color brightness between the regions in which the marble color effect is created and a region in which the marble color effect is not created. By selecting the marble color effect evaluation factor from those described above, it is possible to clearly distinguish the boundary of the region in which the marble color effect is created. Specifically, the evaluation factor determination unit 40 may determine, as the marble color effect evaluation factor, at least one of the number of regions (marbled regions) in which the marble color effect is created, the average size of the marbled regions, and the difference in average color brightness between the marbled regions and the background (non-marbled region) excluding the regions in which the marble color effect is created, from the image processed by the image processing unit 30, and determination of the marble color effect evaluation factor may be executed by a predetermined processor.

The evaluation element determination unit may determine the marble color effect evaluation factor for each color of the region in which the marble color effect is created. By determining the marble color effect evaluation factor as described above, it is possible to improve the effect of clearly distinguish the boundary of the region in which the marble color effect is created.

### Mode for Invention

Hereinafter, the present invention will be described in detail with reference to examples.

### Example 1

A mixture, obtained by mixing a thermoplastic resin composed of a mixture of polycarbonate (PC) and acrylonitrile-butadiene-styrene (ABS) with mica as fine pigment particles, was injection-molded in a mold cavity having a pattern formed on the inner surface thereof, thereby producing a marbled molded product as an injection-molded product. The marbled molded product was produced by injection molding in a mold in which the inner surface of the mold cavity, on which the pattern was formed, had an average roughness (Ra) of 1.12 pm.

### Example 2

A marbled molded product was produced in the same manner as in Example 1, except that it was produced by injection molding in a mold in which the inner surface of the mold cavity, on which the pattern was formed, had an average roughness (Ra) of 3.15 µm.

### Example 3

A marbled molded product was produced in the same manner as in Example 1, except that it was produced by injection molding in a mold in which the inner surface of the mold cavity, on which the pattern was formed, had an average roughness (Ra) of 6.30 pm.

### Comparative Example 1

A mixture, obtained by mixing a thermoplastic resin composed of a mixture of polycarbonate (PC) and acrylonitrile-butadiene-styrene (ABS) with mica as fine pigment particles, was injection-molded in a mold in which the inner surface of a mold cavity had an average roughness (Ra) of 100 nm, thereby producing a molded product.

### Comparative Example 2

A marbled molded product was produced in the same manner as in Example 1, except that it was produced by injection molding in a mold in which the inner surface of the mold cavity, on which the pattern was formed, had an average roughness (Ra) of 12.6 pm.

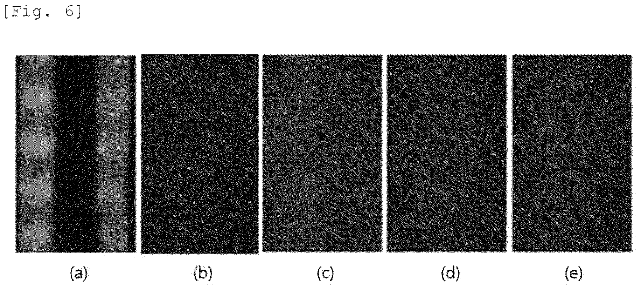

FIGS. 6(a), 6(b), 6(c), 6(d) and 6(e) show images of specimens of Comparative Example 1, Comparative Example 2, Example 1, Example 2 and Example 3, respectively, captured by the image-capturing unit 20 of the marble color effect evaluation system 100 according to one embodiment of the present invention.

Specifically, light generated from the light source unit 10 was incident on the surface of each of the marbled molded products of Comparative Examples 1 and 2 and Examples 1 to 3 while forming an angle with the surface. Following this, an image of light scattered from the surface of each of the molded products was captured by the image-capturing unit 20. The image captured by the image-capturing unit 20 was processed by the image processing unit 30 in order to determine the boundary of the marbled region on the surface of each molded product. From the processed image, marble color effect evaluation factors, including the number of the marbled regions, the average size of the marbled regions, and the difference in average color brightness between the marbled regions and a non-marbled region, were determined by the evaluation factor determination unit 40.

Table 1 below shows the number of the marbled regions, the number of the marbled regions per unit area, the average size of the marbled regions, the difference in average color brightness between the marbled regions and the background (non-marbled region) excluding the marbled regions, and the pencil hardness of the surface, for the molded products of Comparative Examples 1 and 2 and Examples 1 to 3.

Specifically, Table 1 below shows the number of the marbled regions, the number of the marbled regions per unit area, the average size of the marbled regions, the difference in average color brightness between the marbled regions and the background excluding the marbled regions (the difference in average color brightness between the marbled regions and the non-marbled region), and the pencil hardness of the surface, for the specimens of the molded products of Comparative Examples 1 and 2 and Examples 1 to 3.

**[Table 1]**

| | **Comparative Example 1** | **Comparative Example 2** | **Example 1** | **Example 2** | **Example 3** |
|---|---|---|---|---|---|
| Number of marbled regions | 114 | 73 | 320 | 204 | 132 |
| Number of marbled regions per unit area (number/cm²) | 3.6 | 2.3 | 10.0 | 6.4 | 4.1 |
| Average size (µm) of marbled regions | 345 | 330 | 359 | 334 | 293 |
| Difference in average color brightness [△*ab] between marbled regions and non-marbled region | 8.17 | 246 | 11.74 | 15.68 | 21.37 |
| Pencil hardness of surface (measurement conditions: 500 g and 300 mm/min) | B | 2H | HB | H | 2H |

It was confirmed that, in the case of the marbled molded products of the Examples, the number of the confirmed marbled regions per unit area, and the difference in average color brightness between the marbled regions and the non-marbled region were all improved, suggesting that the marble color effect was more effectively visible.

In contrast, it was confirmed that, in the case of the marbled molded product of Comparative Example 1, the hardness was excessively low, and the number of the confirmed marbled regions per unit area, and the difference in average color brightness between the marbled regions and the non-marbled region were all reduced. Furthermore, it was confirmed that, in the case of Comparative Example 2, the number of the confirmed marbled regions per unit area was reduced.

In addition, it was confirmed that the surfaces of the marbled molded products of the Examples had higher pencil hardness than that of Comparative Example 1. That is, it was confirmed that the durability of the marbled molded products produced of the Examples of the present invention was ensured so that damage to the marble color effect could be minimized. However, it was confirmed that, in the case of Comparative Example 2, the hardness increased, but the number of the confirmed marbled regions per unit area was reduced, and thus the marble color effect was degraded.

Furthermore, it was confirmed that, according to the marble color effect evaluation factors of the Comparative Examples and the Examples, in which the evaluation factors of the surfaces were determined by the marble color effect evaluation system, it was possible to determine, for each marbled molded product, the number of the marbled regions, the number of the marbled regions per unit area, the average size of the marbled regions and the difference in average color brightness between the marbled regions and the background excluding the marbled regions, and thus it was possible to quantitatively evaluate the marble color effect.

Therefore, according to the marbled molded product and marble color effect evaluation system, it is possible to provide a marbled molded product in which a marble color may be effectively formed and which may maintain a high surface hardness, and it is possible to provide a marble color effect evaluation system capable of objectively and quantitatively evaluating the marble color effect of the marbled molded product.

### [Description of Reference Numeral]

- 100:: Evaluation system
- 10:: Light source unit
- 20:: Image-capturing unit
- 30:: Image processing unit
- 40:: Evaluation factor determination unit

## Claims

1. A marbled molded product which is an injection-molded product of a mixture comprising: a thermoplastic resin comprising one selected from the group consisting of polycarbonate, acrylonitrile-butadiene-styrene, polybutylene terephthalate, polypropylene, and combinations thereof; and fine pigment particles having a size of 25 pm to 2,000 pm,
wherein a pattern forming a texture is formed on a surface of the injection-molded product,
**characterised in that** the pattern which is formed on the surface of the molded product has a depth of 100 nm to 1,000 µm, and
an average roughness (Ra) of the surface of the molded product, which has the pattern formed thereon, is 1.12 pm to 12.5 pm.

2. The marbled molded product of claim 1, wherein the pattern has a depth of 10 pm to 50 µm and a width of 50 pm to 300 µm, and the texture formed by the pattern is a hairline texture.

3. The marbled molded product of claim 1, wherein the pattern has a depth of 8 pm to 12 µm and a width of 50 pm to 100 µm, and the texture formed by the pattern is a woven texture.

4. The marbled molded product of claim 1, wherein the pattern has a depth of 50 pm to 100 µm, and the texture formed by the pattern is a leather texture.

## Patentansprüche

1. Marmoriertes Formprodukt, das ein spritzgegossenes Produkt einer Mischung ist, umfassend: ein thermoplastisches Harz, umfassend eines, ausgewählt aus der Gruppe, bestehend aus Polycarbonat, Acrylnitril-Butadien-Styrol, Polybutylenterephthalat, Polypropylen und Kombinationen davon; und feine Pigmentpartikel mit einer Größe von 25 µm bis 2.000 µm,
wobei ein Muster, das eine Textur bildet, auf einer Oberfläche des spritzgegossenen Produkts gebildet ist,
**dadurch gekennzeichnet, dass** das Muster, das auf der Oberfläche des Formprodukts gebildet ist, eine Tiefe von 100 nm bis 1.000 µm aufweist, und
eine durchschnittliche Rauheit (Ra) der Oberfläche des Formprodukts, auf der das Muster gebildet ist, 1,12 µm bis 12,5 µm beträgt.

2. Marmoriertes Formprodukt nach Anspruch 1, wobei das Muster eine Tiefe von 10 µm bis 50 µm und eine Breite von 50 µm bis 300 µm aufweist und die durch das Muster gebildete Textur eine Haarlinientextur ist.

3. Marmoriertes Formprodukt nach Anspruch 1, wobei das Muster eine Tiefe von 8 µm bis 12 µm und eine Breite von 50 µm bis 100 µm aufweist und die durch das Muster gebildete Textur eine gewebte Textur ist.

4. Marmoriertes Formprodukt nach Anspruch 1, wobei das Muster eine Tiefe von 50 µm bis 100 µm aufweist und die durch das Muster gebildete Textur eine Ledertextur ist.

## Revendications

1. Produit moulé marbré qui est un produit moulé par injection d'un mélange comprenant : une résine thermoplastique consistant en un membre sélectionné dans le groupe constitué de polycarbonate, d'acrylonitrile-butadiène-styrène, de téréphtalate polybutylène, de polypropylène et de combinaisons de ceux-ci ; et de fines particules de pigment ayant une taille de 25 pm à 2.000 µm,
dans lequel un motif formant une texture est formé sur une surface du produit moulé par injection,
**caractérisé en ce que** le motif formé sur la surface du produit moulé a une profondeur de 100 nm à 1 000 µm, et
la rugosité moyenne (Ra) de la surface du produit moulé, sur laquelle est formé le motif, est comprise entre 1,12 pm et 12,5 pm.

2. Produit moulé marbré selon la revendication 1, dans lequel le motif a une profondeur de 10 pm à 50 µm et une largeur de 50 pm à 300 µm et la texture formée par le motif est une texture capillaire.

3. Produit moulé marbré selon la revendication 1, dans lequel le motif a une profondeur de 8 pm à 12 µm et une largeur de 50 pm à 100 µm et la texture formée par le motif est une texture tissée.

4. Produit moulé marbré selon la revendication 1, dans lequel le motif a une profondeur de 50 pm à 100 µm et la texture formée par le motif est une texture imitant le cuir.
